# EUROPEAN PATENT SPECIFICATION

(11) **EP 1 877 723 B1**
(45) Date of publication and mention of the grant of the patent: **07.06.2017**
(21) Application number: 06744569.2
(22) Date of filing: 26.04.2006
(51) Int. Cl.: G01B 21/04, G01B 3/22, G01B 21/02

(54) **AN IMPROVED APPARATUS FOR CALIBRATING A MEASURING INSTRUMENT**
VERBESSERTE VORRICHTUNG ZUM KALIBRIEREN EINES MESSGERÄTS
APPAREIL AMELIORE POUR L'ETALONNAGE D'UN INSTRUMENT DE MESURE

(30) Priority: 28.04.2005 IT BO20050290
(43) Date of publication of application: 16.01.2008
(73) Proprietor: G.V. S.R.L., 40017 San Giovanni in Persiceto (BO) (IT)
(72) Inventor: BALBONI, Gabriele, I-40017 San Giovanni in Persiceto (IT)
(74) Representative: Brunacci, Marco
(86) International application number: PCT/IB2006/001016
(87) International publication number: WO 2006/114696

(56) References cited:
- GB-A- 2 112 942
- US-A- 2 558 291
- US-A- 2 725 636
- US-A- 2 893 128
- US-A- 3 238 626
- US-A- 3 496 758

## Description

### Technical Field

This invention relates to an apparatus for calibrating a measuring instrument.

### Background Art

Traditionally, the calibration of instruments for measuring a feature, such as a bore, of a mechanical part is performed manually using a plurality of a standard size parts, one for each measurement reading.

Another prior art apparatus for calibrating a measuring instrument comprises a mounting structure and means for calibrating the instrument which, however, must be held firmly in position by operators while it contacts the reference surfaces of the calibrating apparatus.

Under these circumstances, however, calibration tends to be imprecise because it is very difficult for operators to hold the instrument in their hands in exactly the right position for optimum calibration.

For this reason, the trade feels a general need for calibrating means that can be applied to instruments for measuring mechanical features and that permit calibration to be carried out quickly, easily and accurately without having to use a large number of standard forms for all the calibration measurements.

Several kinds of calibrating apparatuses are disclosed in the patent documents US 3,496,758, GB 2 112 942, US 3,238,626, US 2,558,291, US 2,725,636, US 2,893,128.

### Disclosure of the Invention

This invention provides an apparatus as defined in claim 1.

The apparatus can be to be used for calibrating measuring instruments, such as bore gauges and the like, and comprising means for supporting the apparatus and calibrating means having contact means for the respective measuring ends of the instruments to be calibrated, these means being, for each end of the measuring instrument to be calibrated, in the form of a first and a second contact surface; the apparatus being characterised in that it comprises at least one adapter element on at least one of the contact surfaces of the calibrating apparatus, said adapter element comprising means for engaging a portion of the respective end of the measuring instrument, these engagement means being made in such a way that they can receive different measuring instruments.

This makes it possible to support the instrument to be calibrated in optimum manner so that the calibrations of the measuring instrument are much more accurate than those that would be obtained using the methods known to prior art.

Further, a single adapter element can advantageously be used to hold and calibrate a plurality of measuring instruments of different sizes without having to remove the adapter element. The description also describes an apparatus to be used for calibrating measuring instruments, such as bore gauges and the like, and comprising means for supporting the apparatus and calibrating means having contact means for the respective measuring ends of the instruments to be calibrated, these means being, for each end of the measuring instrument to be calibrated, in the form of a first and a second contact surface; the apparatus being characterised in that it comprises means for locking a mobile contact surface in the measuring position. The description further describes an adapter and a set of adapters that can be used on an apparatus for calibrating measuring instruments.

### Brief Description of the Drawings

The technical characteristics and advantageous aspects of the invention will become more apparent from the detailed description which follows, with reference to the accompanying drawings which illustrate preferred embodiments of the invention provided merely by way of example without restricting the scope of the inventive concept, and in which:
- Figure 1 is a schematic side view of a preferred embodiment of the apparatus according to the present invention;
- Figure 2 is a perspective view of the contact heads or uprights of adapter elements according to the preferred embodiment of the invention;

- Figure 3 is a view from above showing the parts illustrated in Figure 2;
- Figure 4 is a front perspective view of a first embodiment of the adapter element according to the present invention;
- Figure 5 is a rear perspective view of the first preferred embodiment of the adapter element according to the present invention;
- Figure 6 is a front view of the first preferred embodiment of the adapter element according to the present invention;
- Figure 7 is a top view of the first preferred embodiment of the adapter element according to the present invention;
- Figure 8 is a cross section through line VIII-VIII in Figure 6 of the adapter element according to the present invention;
- Figure 9 is a front perspective view of a second embodiment of the adapter element according to the present invention;
- Figure 10 is a rear perspective view of the second preferred embodiment of the adapter elements according to the present invention;
- Figure 11 is a front view of the second preferred embodiment of the adapter element according to the present invention;
- Figure 12 is a top view of the second preferred embodiment of the adapter element according to the invention;
- Figure 13 is a cross section through line XIII-XIII in Figure 11 of the second preferred embodiment of the adapter element according to the invention;
- Figure 14 is a front perspective view of a third embodiment of the adapter element according to the invention;
- Figure 15 is a rear perspective view of the third preferred embodiment of the adapter element according to the invention;
- Figure 16 is a front view of the third preferred embodiment of the adapter element according to the invention;
- Figure 17 is a top view of the third preferred embodiment of the adapter element according to the invention;
- Figure 18 is a cross section through line XVIII-XVIII in Figure 16 of the third preferred embodiment of the adapter element according to the invention;
- Figure 19 is a cross section of the apparatus according to the invention, showing the means for locking the mobile head in a first operating condition;
- Figure 20 is a cross section similar to Figure 19 but showing the means for locking the mobile head in a second operating condition;
- Figure 21 is a longitudinal section of the locking means in a second operating condition, at the mobile head;
- Figure 22 is a schematic side view of the connecting end of the mobile head locking rod;
- Figure 23 shows the other end of the mobile head locking rod;
- Figure 24 is a perspective view of a second embodiment of the apparatus according to the present invention;
- Figure 25 shows the second preferred embodiment of the apparatus according to the present invention in a perspective view from the other side of that of Figure 24;
- Figure 26 is a side view of the second embodiment of the apparatus according to the invention;
- Figure 27 is a top view of the second embodiment of the apparatus according to the invention;
- Figure 28 is a front view of the fixed head of the second embodiment of the apparatus according to the invention;
- Figure 29 is a top view of a second preferred embodiment of the freely expanding connection which may be used in the second embodiment of the apparatus according to the invention.

### Detailed Description of the Preferred Embodiments of the Invention

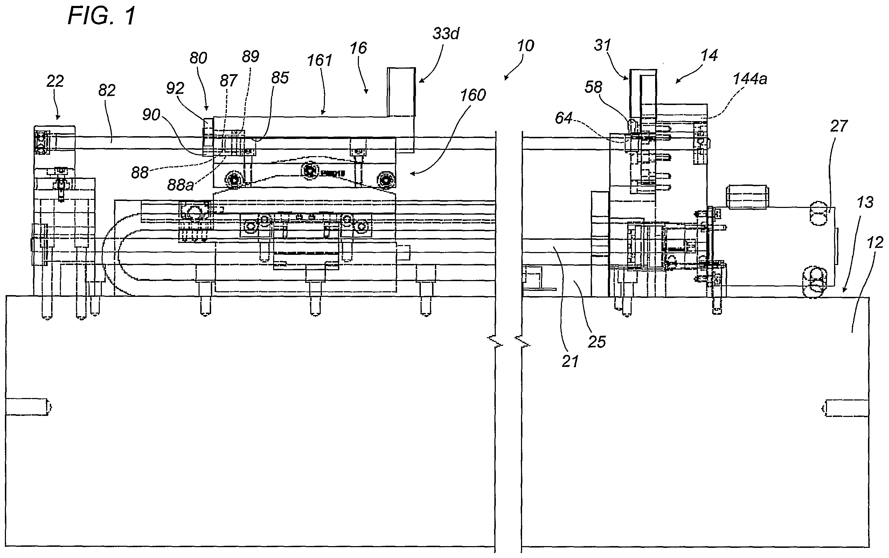

With reference to Figure 1, an apparatus 10 according to this invention, in a first preferred embodiment of it, is used for calibrating measuring instruments, not illustrated in Figure 1, such as bore gauges, groove gauges, precision feeler bore gauges, ID and OD micrometers, including stem type micrometers, precision ID and OD caliper gauges, mechanical and electronic contact plug gauges, as described in more detail below. As is known, these measuring instruments have gauging ends that vary considerably according to the type, size and manufacturer of the measuring instrument.

The apparatus according to the invention therefore comprises means for supporting the apparatus, consisting of a frame 13, which in turn comprises a thick base plate 12 made of granite and a cover, not illustrated in detail in the drawing, made from shaped metal sheet and having a long opening from which the contact heads, described in more detail below, extend out of the apparatus. The cover also has a display unit, not illustrated, associated with means for controlling the apparatus, and is substantially the same as that of the apparatus described in international application WO2005/038389 (not disclosed before the priority date of the present application) in the name of the same applicant as this invention.

The apparatus according to this invention also comprises means for calibrating measuring instruments.

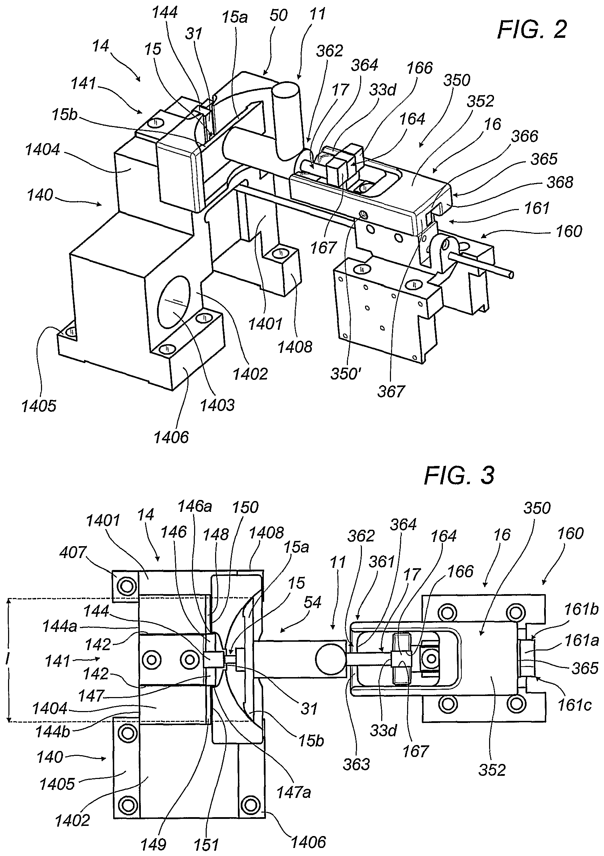

With reference also to Figures 2 and 3, the calibrating means comprise means for coming into contact with a first gauging end 15 of the instrument 11 to be calibrated and a second gauging end 17 of the instrument 11 itself. Figures 2 and 3 show only the bottom part of the instrument to be calibrated, consisting of a bore gauge.

For example, the measuring instruments may vary in accordance with the width "1" or distance between the ends for supporting a measuring end. As will become more apparent below, the adapter according to the invention is designed to receive instruments having different widths.

The contact means are mobile relative to each other and comprise a fixed block 14 that is engaged by one end 15 of the measuring instrument and has a surface 31 - made preferably of ceramic or other suitable material - for coming into contact with that end 15 of the instrument, and a mobile block 16 that also has a contact surface 33d, made preferably of ceramic or other suitable material, for the other end 17 of the measuring instrument.

As illustrated, the contact surfaces 31, 33d are positioned opposite each other. The respective elements that support or define the first contact surfaces 31, 33d support or define, at the respective longitudinally opposite end, corresponding second contact surfaces which are suitable, in particular, for calibrating an instrument used to measure outside diameters. This feature is the same as that of the apparatus described in international patent application WO2005/038389.

As illustrated, the contact surfaces of the fixed block 14 and of the mobile block 16 are aligned with each other along a horizontal line running lengthways along the apparatus, or transversally with respect to an operator standing in front of the apparatus in working condition.

More specifically, as shown in Figures 2 and 3, the fixed block 14 comprises a supporting member 140 rigidly fixed to the granite base 12 and a contact element mounting body or block 141 that is fitted in and retained by a long cavity 142 made in the supporting member 140.

As illustrated, the supporting member 140 has a portal frame structure with a first, narrow column 1401 and a second, wider column 1402 having a longitudinal through hole 1403 made in it to house one end of a shaft for driving the mobile head and protruding from a motor 27 mounted on the column 1402.

Looking at it as a whole, with reference to Figure 2, the fixed block 140 has a stepped shape, with an upright 1404 having a substantially square base, on which there is positioned a mounting block 140 for the contact means.

For strengthening the portal frame structure, each of the columns 1401, 1402, has longitudinal extensions or tabs. More specifically, the longitudinal extensions of the wide column 1402 are labelled 1405 and 1406, whilst the longitudinal extensions of the column 1401 are labelled 1407 and 1408. These extensions have respective holes for respective screws to be inserted into the granite base. This makes the structure of the fixed block particularly rigid and resistant.

The ceramic surface 31 is made at the end of a prismatic insert 144 with a rectangular base held within an opening 145 between two perpendicular walls 146, 147 of the shaped metal mounting block 141. As illustrated, the prismatic insert 144 protrudes from the front and back of the perpendicular walls 146, 147.

At the front of and lower down than the side walls 146, 147 there are plates 148, 149, that are thinner than the side walls 146, 147 and form respective front surfaces 150, 151 for engaging the rear surface of the adapter means.

The side walls 146, 147 also form a longitudinal lateral surface 146a, 147a for guiding or centring the respective surfaces of the adapter.

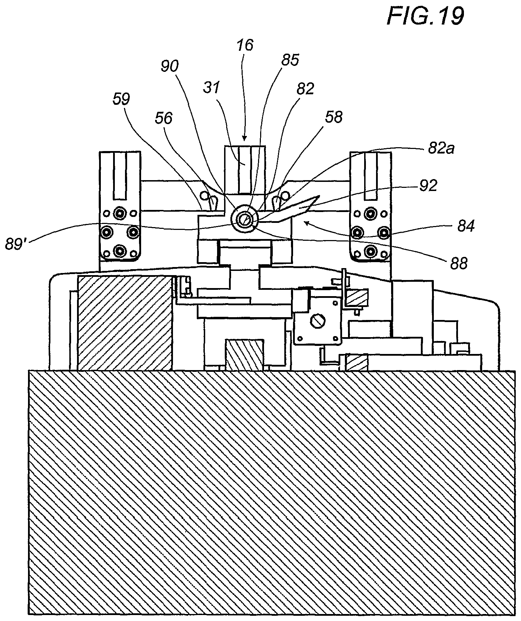

The means for connecting the adapter 50 to the head 14 also comprise, on the head 14, a first and a second pin 56, 58 (better illustrated in Figure 19) to be inserted into matching holes in the adapter and protruding from a corresponding horizontal flat surface 59 on which the bottom surface of the adapter rests.

Means are also provided for retaining the adapter body, these means being in the form of spring means designed to push the adapter towards and against opposite vertical surfaces 150, 151 of the fixed block 14.

The spring pushing means comprise springs (not illustrated), each supporting a respective insertion pin 56, 58 and being oriented vertically and housed in respective vertical holes made in the fixed block 14, only the hole 64 for the pin 58 being shown in Figure 1.

At an upper end of the middle upright 144, the fixed block also comprises a first and a second longitudinal through hole - only the hole 144a being illustrated in Figure 1 - which extend horizontally between the rear faces 140b, 140c and the front faces 150', 151 of the supporting member 140.

These holes for retaining the back of the adapter are designed to receive respective screws (not illustrated) for fastening the back of an adapter in such a way as to provide additional means for locking and securely retaining the adapter in the working position. These locking means are especially advantageous for holding relatively long or protruding adapters. These features are substantially the same as those described in the aforementioned international patent application WO2005/038389.

The mobile block 16 in turn comprises a transversally mobile supporting member 160 and a contact element mounting body or block 161 that is fitted in and retained by a long cavity 162 made in the supporting member 160. Screws are provided to hold the block 161 to the lower mobile guide member 160 and are inserted into matching vertical holes made in a rear, flat top surface of the block 160.

As illustrated in Figures 2 and 3, the contact means mounting block 161 extends upwards and comprises a first and a second vertical lateral surface 161b, 161c held between respective opposite first and second longitudinal walls of the supporting member 160.

As illustrated, the ceramic contact surface 33d is made at the end of a prismatic insert 164 with a substantially rectangular base held within an opening between two perpendicular walls 166, 167 of the shaped metal mounting block 161.

Means are also provided for driving the mobile block.

The means for driving the mobile block comprise mobile block guiding means, not illustrated in detail in Figure 1, comprising a rod of quadrangular cross section extending transversally between the fixed block 14 and an opposite fixed block 22.

More particularly, the second fixed block 22 comprises a supporting member rigidly fixed to the granite base and also having a portal frame structure with a first, narrow column and a second, wider column having a longitudinal through hole made in it for the passage of suitable means for supporting the respective end of the drive shaft, on the side opposite that protruding from the electrical control motor.

The lower end of the mobile block 16 runs on the guide rod, the two parts having matching quadrangular profiles.

The shaft that drives the mobile block 16 backwards and forwards is, advantageously, vertically aligned and parallel with a rod of quadrangular cross section, extending transversally between the fixed block 14 and an opposite fixed block 22 bearing a graduated measuring rod or rule. This arrangement of the drive shaft makes it possible to obtain a particularly accurate calibration.

The mobile block drive means also comprise means for feeding the mobile block itself which in turn comprise a rotary shaft 21, of circular cross section, that is parallel with and longitudinally spaced from the guide rod fixed to the base plate and that also extends transversally between the fixed block 14 and the opposite fixed block 22.

On the rotary shaft 21 there operates an instant locking feed mechanism, housed in the head 16 and not illustrated in detail in the accompanying drawings, which, by rotating the shaft, advances the slider 16, and stops the slider 16 in the desired position to a great degree of precision as soon as the shaft is stopped. Obviously, any other device suited to the purpose might also be used.

The mobile head is driven lengthways along the guide rod 20 by a motor 27 which rotationally drives the shaft 21, said motor being mounted, as illustrated, on the fixed head 14.

The drive shaft 21 is firmly connected to the fixed head 14 by a ring nut acting on a respective bearing in the through hole for the shaft, while, at the opposite end, that is, at the fixed block 22, the shaft 21 is held solely by a bearing housed in a large through hole relative to which it is free to move slightly owing to the expansion of the rod.

There is also provided a tape (not illustrated in the drawings) which closes the opening in the cover when the mobile block moves. The tape 23 is fitted between the fixed heads 14 and 22 and is appropriately connected to the mobile head 16.

Control or processing means are also provided. These means comprise a CPU, a memory unit, a display unit, a keyboard and CPU signal input/output means, none of these being illustrated in the drawings.

Means are also provided for determining the calibration measurement.

The means for determining the calibration measurement comprise means for detecting the position of the mobile block 16, said means comprising a sensor, preferably optical, mounted on the mobile block 16, and a graduated rod 25 supported by the base 12 in front of the means for driving the mobile block 16.

The optical sensor is directed at the graduated rod, or means for determining the calibration measurement, and sends corresponding signals when it passes by the millimetre marks on the graduated rod.

As illustrated, the graduated rod 25, which, for example, might by a rule manufactured by RENISHAW or HAIDENHAIN, extends transversally and lies in a vertical plane since it is fixed, firmly on the side facing the block 16. In this way, dirt or other extraneous matter that finds its way into the apparatus does not settle on the rule 25 and cannot upset the measuring operation. These features are substantially the same as those described in the aforementioned international patent application WO2005/038389.

As mentioned above, the apparatus according to the invention also comprises adapting means consisting, more particularly, of an adapter element 50 positioned on the fixed block 14 and enabling a respective measuring instrument 11 to be placed on the device.

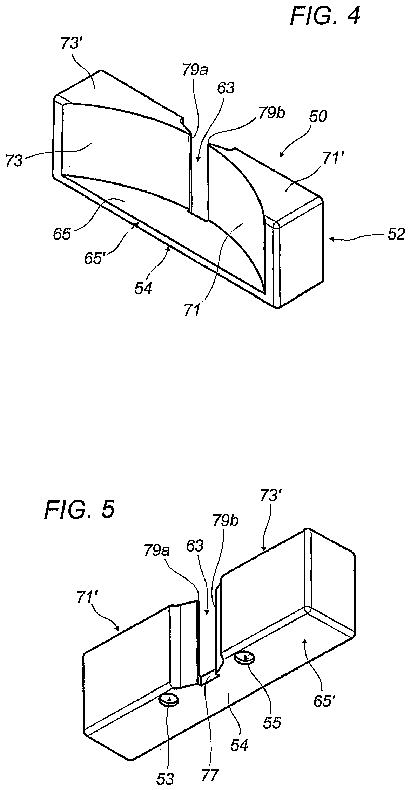

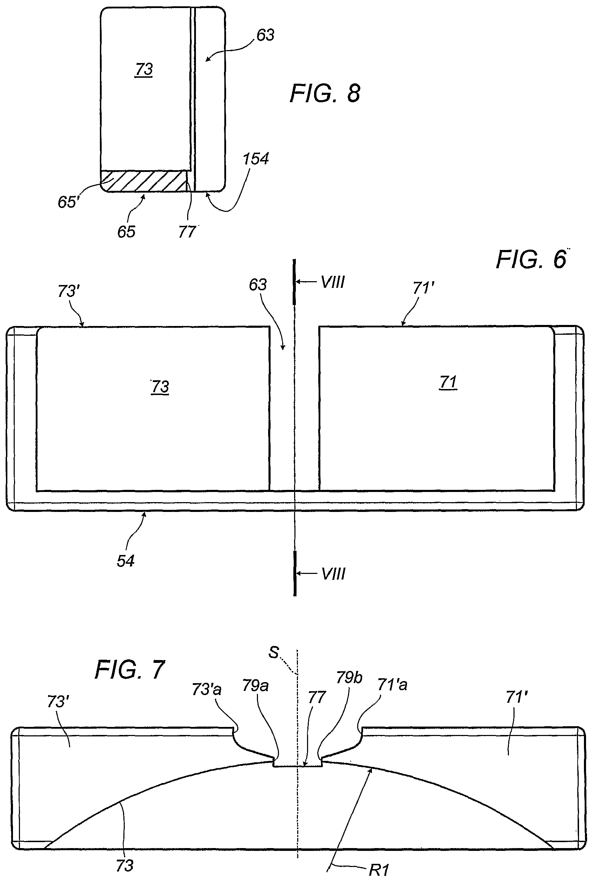

As illustrated in Figures 4 to 7, the adapter element according to the invention comprises means which engage a respective end of the measuring instrument and which are made in such a way that they can receive different measuring instruments.

Thus, the engagement means of the adapter element 50 comprise a first and a second lateral engagement surface 71, 73, positioned opposite one another and facing the corresponding portions 15a, 15b of the respective end of the instrument to be supported.

Advantageously, as illustrated, the first and second engagement surfaces 71, 73 of the adapter element 50 are curved surfaces whose curvature radius is such as to define, for each engagement surface, a plurality of contact points for corresponding lateral portions of different measuring instruments.

The curvature radius R1 of these engagement surfaces is preferably 100 mm.

The adapter comprises a slot 63 made in its rear wall and forming a passage for the contact surface 31 of the fixed block 14.

As illustrated, the first and second engagement surfaces 71, 73 extend forward longitudinally from the front edge of the longitudinal surfaces 79b, 79a, forming the respective opening 63, with their concave sections facing the front, that is to say, facing the direction of the instrument to be engaged.

As illustrated, the first and second engagement surfaces 71, 73 extend transversally and symmetrically relative to the sides of the central slot 63.

In practice, as illustrated, considering a virtual axis of symmetry S extending longitudinally from the centre line through the slot 63, the engagement surfaces 71, 73 lie on a single circle whose centre is on the extension of said axis of symmetry S.

Means are also provided for connecting the adapter 50 to the fixed block.

The means for connecting the adapter 50 to the mounting block 14 comprise a first and a second hole 53, 55 made in a horizontal flat bottom surface 54 of the supporting member 52.

As mentioned above, the means for connecting the adapter 50 to the head 14 comprise, on the head 14, a first and a second pin 56, 58 to be inserted into matching holes 53, 55 and protruding from a corresponding horizontal flat surface 57 on which the bottom surface 54 of the adapter rests.

As illustrated, the supporting member 52 comprises respective lateral and vertical abutting surfaces 71 and 73 for opposite side portions 15a, 15b of the shaped end 15 of the measuring instrument 11, each of the lateral surfaces being defined by a first and a second side wall 71', 73'.

In practice, the bore gauge is placed with the lateral portions 15a, 15b between the surfaces 71 and 73, which form a support in the longitudinal direction and exert a lateral, or transversal, containing action on the gauge.

The adapter 50 also comprises a bottom wall 65'. The latter constitutes both the bottom surface 65 that supports the shaped end 15 of the measuring instrument 11, which, in use, extends horizontally, and the bottom surface 54 that supports the adapter.

The reference numerals 79a and 79b denote longitudinal guide walls for the insertion of opposite lateral faces of the portion 144 which bears the contact surface 31.

The reference numeral 77, on the other hand, denotes a recessed transversal surface for receiving the contact element 31 and which is formed in the bottom wall 65', while the reference numerals 71'a and 73'a denote respective internal transversal faces of the side walls 71' and 73' which converge towards the front of the adapter.

This first preferred adapter 50 is preferably 125 mm wide, measured transversally across the lateral ends of the curved walls 71' and 73'.

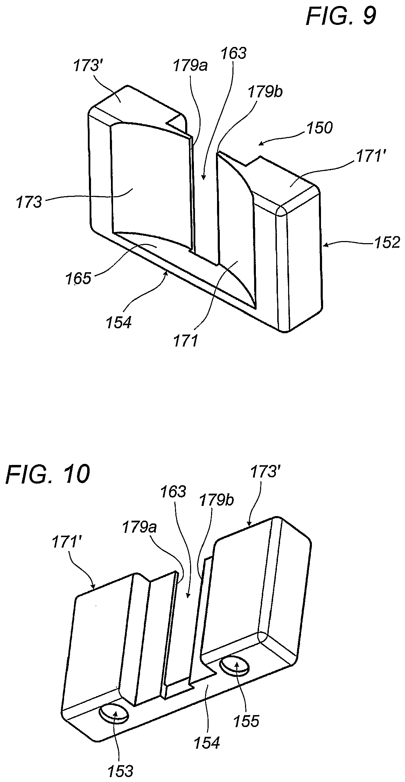

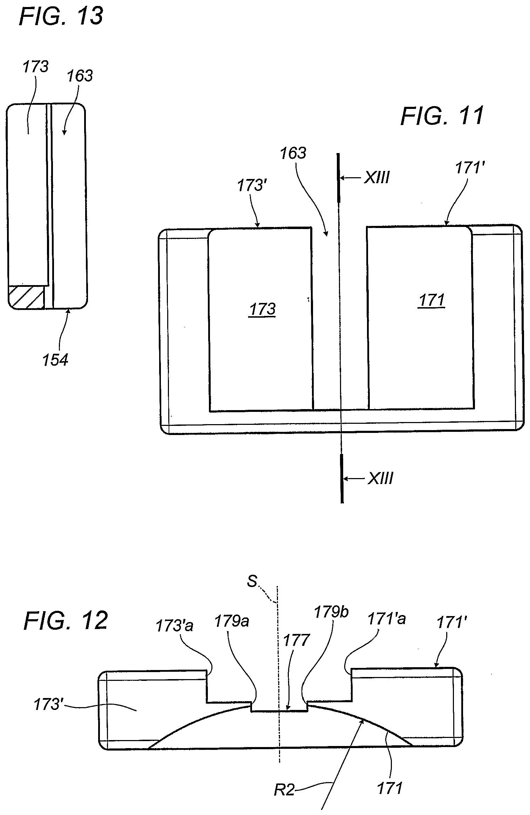

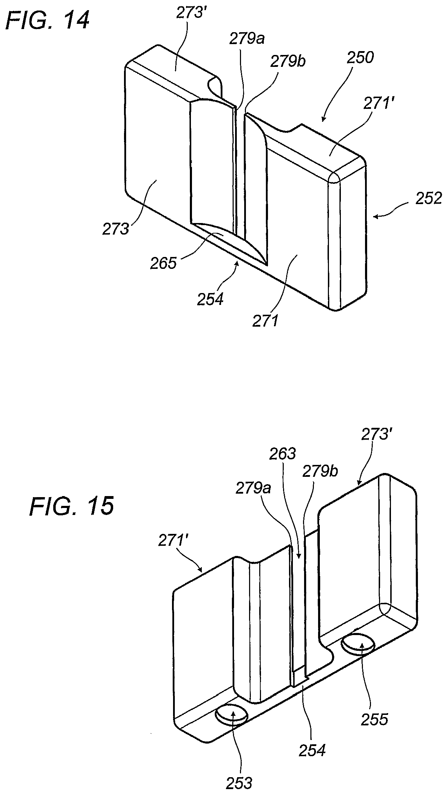

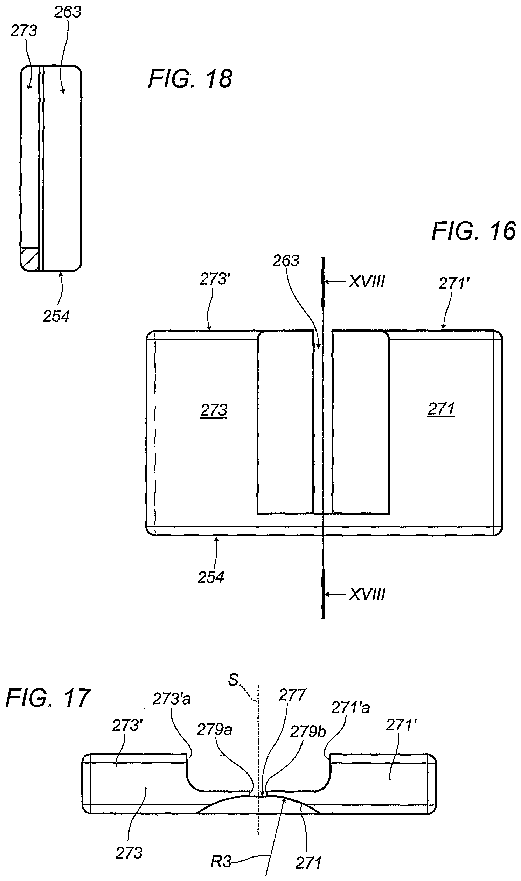

A second and a third embodiment of the adapter element, labelled 150 and 250, respectively, are illustrated in Figures 9 to 13 and 14 to 17, respectively. The second and third embodiments 150, 250 of the adapter element are substantially the same as the first preferred embodiment 50, from which they differ mainly in geometrical dimensions, in particular, the different curvature radius of the engagement surfaces which are adapted to support, in similar manner, corresponding pluralities of instruments.

The second and third embodiments 150, 250 of the adapter element comprise engagement means having a first and a second lateral engagement surface 171, 173 and 271, 273, respectively, positioned opposite one another and facing the corresponding portions (15a, 15b) of the respective end of the instrument to be supported.

Advantageously, as illustrated, the first and second engagement surfaces 171, 173 and 271, 273 are curved surfaces whose curvature radius is such as to define, for each engagement surface, a plurality of contact points for corresponding lateral portions of different measuring instruments.

The curvature radius R2, in the second preferred embodiment, is preferably 50 mm, while the curvature radius R3, in the third preferred embodiment, is preferably 25 mm.

Each adapter 150, 250 comprises a central slot 163, 263 made in its rear wall and forming a passage giving the measuring end of the measuring instrument access to the contact surface 31 of the fixed block 14.

As illustrated, the first and second engagement surfaces 171, 173 and 271, 273 extend forward longitudinally from the front edge of the longitudinal surfaces 179b, 179a and 279b, 279a, forming the respective central opening 163, 263, with their concave sections facing the front, that is to say, facing the direction of the instrument to be engaged.

As illustrated, the first and second engagement surfaces 171, 173 and 271, 273 extend transversally and symmetrically relative to the sides of the central slot 163, 263.

In practice, as illustrated, considering a virtual axis of symmetry S extending longitudinally from the centre line through the slot 163, 263, the engagement surfaces 171, 173 and 271, 273, lie on a single circle whose centre is on the extension of said axis of symmetry S.

Means are also provided for connecting the adapter 150, 250 to the fixed block. The means for connecting to the supporting block 14 comprise, a first and a second hole 153, 155 and 253, 255, which are made in a flat, horizontal bottom surface 154, 254 of the respective supporting member 152, 252 and which are designed to receive a matching pin 56, 58 of the fixed head 14.

Each supporting member 152, 252 also comprises respective lateral and vertical abutting surfaces 171, 173 and 271, 273 for opposite side portions 15a, 15b of the shaped end 15 of the measuring instrument 11, each of said lateral surfaces being defined by a first and a second side wall 171', 173' and 271', 273'.

Each adapter 150, 250 also comprises a respective bottom wall 165', 265'. The latter constitutes the bottom surface 165, 265 that supports the shaped end 15 of the measuring instrument 11, which, in use, extends in a substantially horizontal direction.

The reference numerals 179a, 179b and 279a, 279b denote longitudinal guide walls for the insertion of opposite lateral faces of the portion 144 which bears the contact surface 31.

The reference numeral 177, 277 on the other hand, denotes a recessed transversal surface for receiving the contact element 31 and which is formed in the bottom wall 165', 265', while the reference numerals 171'a 173'a and 271'a 273'a denote respective inside faces of the side walls 171', 173' and 271', 273' constituting surfaces for guiding the element that bears the contact surface.

The maximum width of the second preferred adapter is preferably 80 mm, while the maximum width of the third preferred adapter is preferably 78 mm.

The reference numeral 350 in Figures 2 and 3 denotes a second adapter element associated with the mobile head 16.

As illustrated, the adapter element 350 on the mobile head consists of an element 352, preferably of metal, and comprises a vertical plate 361 that defines a triangular or dovetail groove 362 formed by downwardly converging opposite surfaces 363, 364. As illustrated, the groove 362 constitutes a portion for supporting a measuring end 17 of a bore gauge or other measuring instrument and which abuts against the contact surface 33d of the mobile calibrating element 16.

In order to support the plate 361 at the front 33d of the contact means on the mobile head 16, the second element 352 has a C-shaped longitudinal profile 365 having an upper wing 366 abutting against the rear top surface 161a of the contact element mounting block and respective lateral wings 367, 368 placed in parallel over the vertical surfaces 161b, 161c contact element mounting block 161.

The adapter element 350 has engagement means that enable it to be positioned longitudinally in the most suitable position, that is, to be adjusted as required.

For this purpose, the means for locking the second adapter element 352 to the fixed head comprise a suitable threaded pin, not illustrated in Figures 2 and 3, which fits into a threaded hole 350' and whose front end is designed to contact the corresponding lateral surface 161b of the contact element mounting block. The pin is actuated by a knob that is not illustrated in the drawings. By screwing the locking pin in and out, the adapter 350 can be moved backwards and forwards on the mobile head 16, to the required position suitable for supporting a corresponding end of the adapter. At this point, all that needs to be done is to turn the actuating knob in order to stop the pin against the corresponding surface 161b, thereby causing the locking pin to lock the adapter 350 with respect to the mobile head 16.

According to another aspect, illustrated in particular in Figure 1 and in Figures 19 to 21, the calibrating apparatus according to the invention also comprises means 80 for locking the mobile contact element 31 in the measuring position.

As illustrated in Figure 1, these locking means 80 comprise a rod 82 which extends across the fixed heads 14 and 22 and to which the mobile head 16 is suitably connected, as described in more detail below.

In practice, the rod 82 extends longitudinally along the apparatus and passes through a hole 85 in the mobile head 16 and through a hole 87 in a bush 88 fitted in a matching cylindrical opening 89 made at the end of the mobile head 16 opposite the end facing the main fixed head 14.

For locking the mobile head 16 in place when a measuring instrument is calibrated, suitable retaining means 84 which can be engaged and released manually are provided, said means 84 acting in conjunction with the rod 82 to lock the mobile head 16 in the measuring position.

These retaining means 84 can be moved between a position in which the mobile head 16 can slide freely with respect to the fixed rod 82 and a position in which the mobile head 16 is locked to the fixed rod 82.

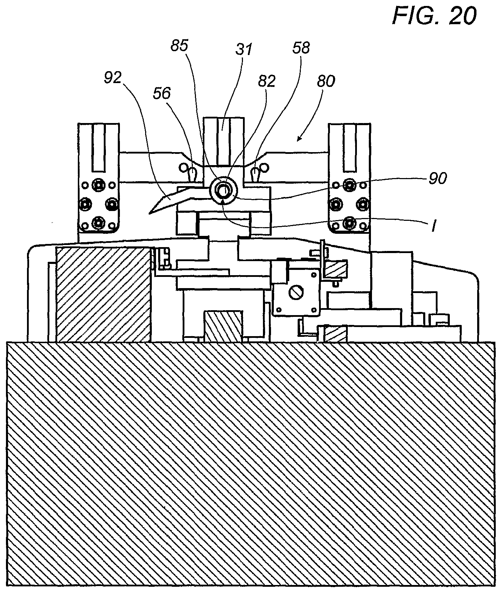

In practice, the annular element 88 of the retaining means 84 can turn freely in the hole or housing opening 89 between an angular position, illustrated in Figure 19, in which the mobile head 16 can move freely, and an angular position, illustrated in Figure 20, in which it is locked to and cannot slide along the rod on the fixed head.

As illustrated in particular in Figures 19 and 20, the bush 88 has, on the outside of the opening 89 in the mobile head 16, an annular portion 90 from which there extends a protruding portion 92 defining an actuating lever.

In practice, in the free sliding position illustrated in Figure 19, there is annular gap, labelled 89', between the inside surface of the hole 85 in the annular retaining element 88 and the outside surface 82a of the locking shaft 32, preventing the two parts from coming into contact and thus allowing the mobile head to slide freely relative to the rod 82.

When the actuating lever 92 is turned from the sliding position shown in Figure 19 to the locked position shown in Figure 20, thanks to the fact that the hole 85 through which the rod 82 passes is eccentrically positioned relative to the outside cylindrical surface 88a of the fixed rod 82, interference is created between said outside cylindrical surface 82a and the inside surface 85 of the annular element 88, in particular at the point "I" shown in Figure 20.

Advantageous means are also provided for tensioning the locking rod 82. These tensioning means make it possible to avoid dangerous bending of the locking rod 82.

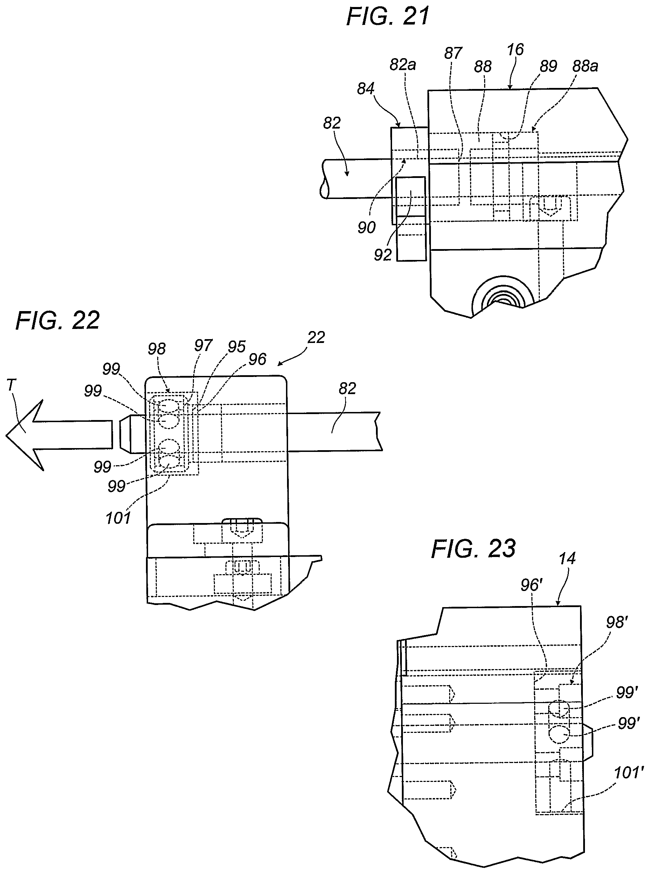

In particular, the tensioning means comprise means for applying a pulling action "T" on the rod 82, as shown in Figure 22.

As illustrated in Figure 22, these tensioning means consist of spring means, schematically illustrated and labelled 95 in the drawing, which act between a shoulder surface 96 in the fixed head 22 and a corresponding transversal surface element 97 located on an annular element 98 attached to the corresponding end of the fixed rod 82.

The element 98 attached to the fixed rod 82 comprises a plurality of spherical elements, labelled 99 in the drawing, which are peripherally positioned around the corresponding outside surface of the rod 82 and pushed against said surface in such a way as to firmly engage the rod 82.

These engagement elements 99 are mounted in an annular frame 98 housed in a respective cavity 101 formed in the side of the head 22 opposite the other fixed head 14.

At the other fixed head 14, the tensioning means also comprise, as illustrated in Figure 23, respective means for retaining the rod 82, which in turn comprise respective engagement spheres 99', circumferentially positioned around the corresponding peripheral surface of the rod 82. The retaining elements 99' are housed in an annular element 98' which abuts against a corresponding surface 96' of a cavity 101' formed in the side of the head 14 opposite the mobile head 16.

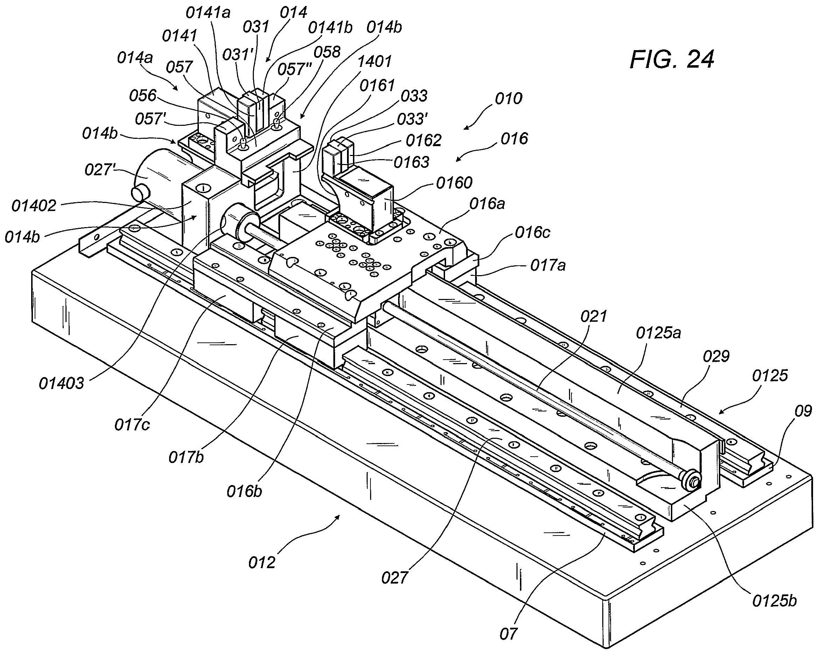

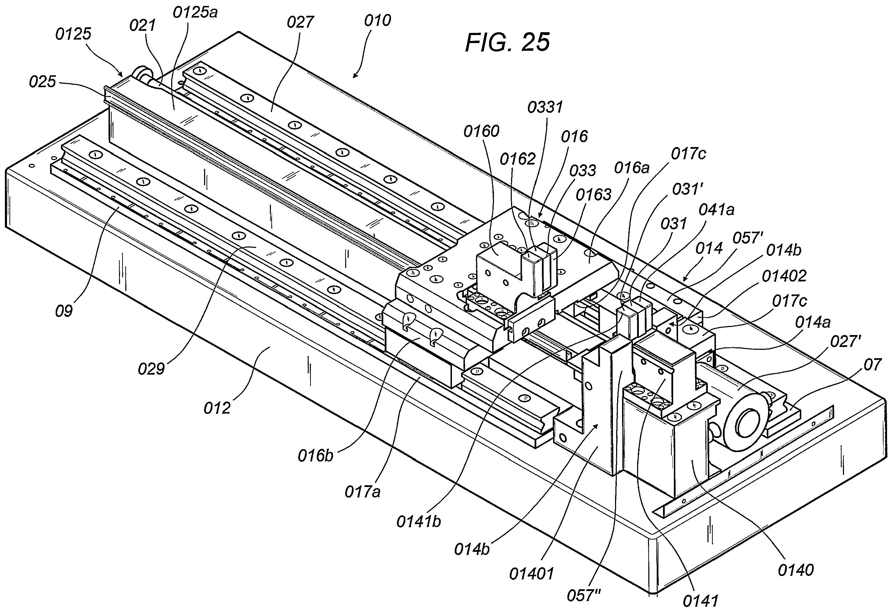

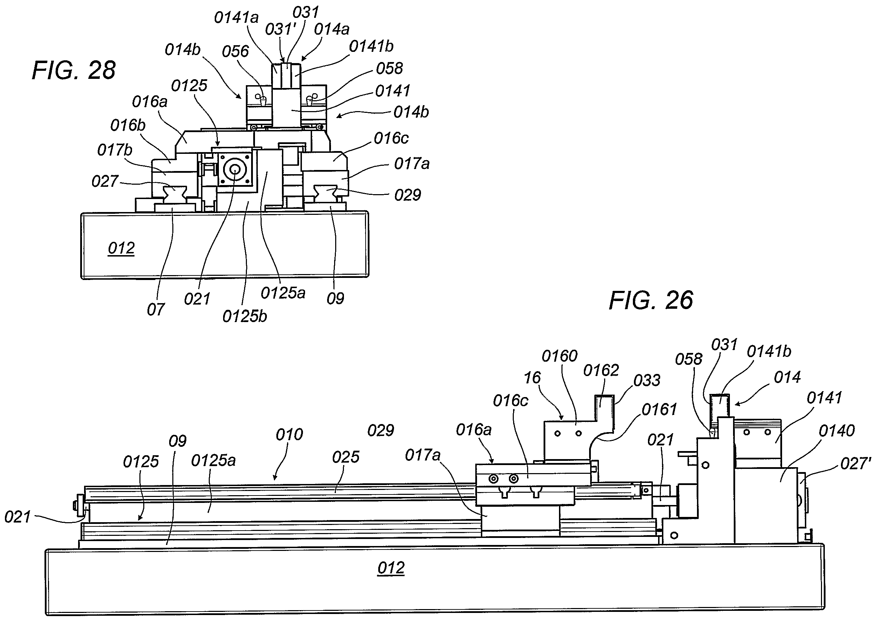

A second preferred embodiment 010 of the apparatus for calibrating a measuring instrument is illustrated in Figures 24 to 28.

This embodiment of the apparatus according to the invention comprises means for supporting the apparatus consisting of a thick base plate 012 preferably made of granite and a cover, not illustrated in detail in the drawing, made from shaped metal sheet and having a long opening from which the contact heads extend out of the apparatus, as in the first embodiment, described above. The cover also has a display unit, not illustrated, associated with means for controlling the apparatus.

The second embodiment of the apparatus according to this invention also comprises means for calibrating measuring instruments.

As may be inferred from the drawings, the calibrating means comprise corresponding contact means including a fixed block 014, that is engaged by one end of the measuring instrument and has a surface 031 - of ceramic or other material - which comes into contact with the end of the instrument, and a mobile block 016, that also has a surface 033 - of ceramic or other material - which comes into contact with the corresponding end of the measuring instrument.

As illustrated, the contact surfaces 031, 033 are positioned opposite each other. The respective supporting elements support, or define, at the respective longitudinally opposite end, corresponding second contact surfaces which are suitable, in particular, for calibrating an instrument used to measure outside diameters.

As illustrated, the contact surfaces of the fixed block 014 and of the mobile block 016 are aligned with each other along a horizontal line running lengthways along the apparatus, or transversally with respect to an operator standing in front of the apparatus in working condition.

The means that drive the mobile block 016 backwards and forwards comprise a revolving shaft 021 that extends longitudinally between the fixed block 014 and the opposite fixed block, not illustrated in the drawings, in exactly the same way as in the first preferred embodiment.

As in the first preferred embodiment, described above, the revolving shaft 21 of the second embodiment is operated upon by an instant locking feed mechanism, housed in the head 016 and not illustrated in detail in the accompanying drawings, which, by rotating the shaft, advances the slider 016, and stops the slider 016 in the desired position to a great degree of precision as soon as the shaft is stopped.

The mobile head is driven lengthways along the guide rod 020 by a motor 027' which rotationally drives the shaft 021, said motor 027' being mounted, as illustrated, on the fixed head 014.

Control or processing means are also provided. These means comprise a CPU, a memory unit, a display unit, a keyboard and CPU signal input/output means, none of these being illustrated in the drawings.

Means are also provided for determining the calibration measurement of the respective instrument. The means for determining the calibration measurement comprise means for detecting the position of the mobile block 016, said means comprising a sensor, preferably optical, mounted on the mobile block 016, and a graduated rod 025 extending parallel to and on one side of the means 021 for driving the mobile block 016. The optical sensor is directed at the graduated measuring rod and sends corresponding signals when it passes by the millimetre marks on the graduated rod 025.

As illustrated, the graduated rod 025 extends in a vertical plane.

The apparatus according to the invention also comprises adapting means consisting, more particularly, of an adapter element like the ones described above, said adapter element being positioned on the fixed block 014 and enabling a respective measuring instrument to be placed on the device. The adapter element is not illustrated in detail in Figures 24 to 29, which do, however, clearly show the first and second adapter retaining pins 056, 058 that are designed to be inserted into respective holes in the adapter and protrude from a corresponding flat horizontal surface of a crosspiece 057 on which the underside of the adapter rests.

Means 027, 029 are also provided for guiding the mobile block 016 and which advantageously comprise a first and a second guide rod 027, 029 extending lengthways and being transversally spaced from each other. The first and second guide rods enable the mobile block 016 to be moved in a more balanced manner, thus achieving improved measuring precision.

As illustrated, the mobile block 016 has a large transversal plate 016a which extends transversally across the first and second guide rods 027, 029 and which is mounted on side shoes 017a, 017b, 017c running on the respective guides 027, 029 through side connecting blocks 016b, 016c.

Advantageously, there extends upwards from a lateral or offset position on this large quadrangular plate 016a an element 0160 for supporting the block 033' and defining the contact surfaces of the mobile block 016, said block 033' being held between the vertical fork-like branches 0162, 0163 of the supporting element 0160.

Advantageously, the contact surface supporting element 0160 has a curved bottom section 0161 joining the main body of the block 0160 to the fork 0162, 0163 that holds the element 033' and defines the contact surfaces. This guarantees greater overall strength and, hence, higher measuring precision.

As illustrated, the drive shaft 021 extends between the guide rods 027, 029. Thus, the pulling action applied to the mobile block in order to move it is more balanced, without unwanted torsion on the mobile block itself and guaranteeing higher measuring precision.

Further, as illustrated, the mobile block 016 has, on one side, a first slide shoe 017a and, on the opposite side, a first and a second slide shoe 017b, 017c, aligned with each other lengthways.

As illustrated, the distance between the drive shaft 025 and the guide rod 027 for the pair of shoes 017b, 017c is one third of the distance between the guide rods 027, 029, and, therefore, the distance between it and the guide rod for the single shoe 017a is two thirds of the distance between the guide rods. This allows a more uniform distribution of the sliding stress transmitted by the drive shaft to the shoes, which in turn means higher measuring precision.

Advantageously, the invention contemplates the provision of freely expanding means 07, 09 for connecting the guide means 027, 029 to the base 012 in order to prevent stress due to different thermal expansion of the base and guides.

More specifically, the freely expanding means for connecting the guide means to the base comprise interposed means 07, 09 located between the guide means 027, 029 and the base 012.

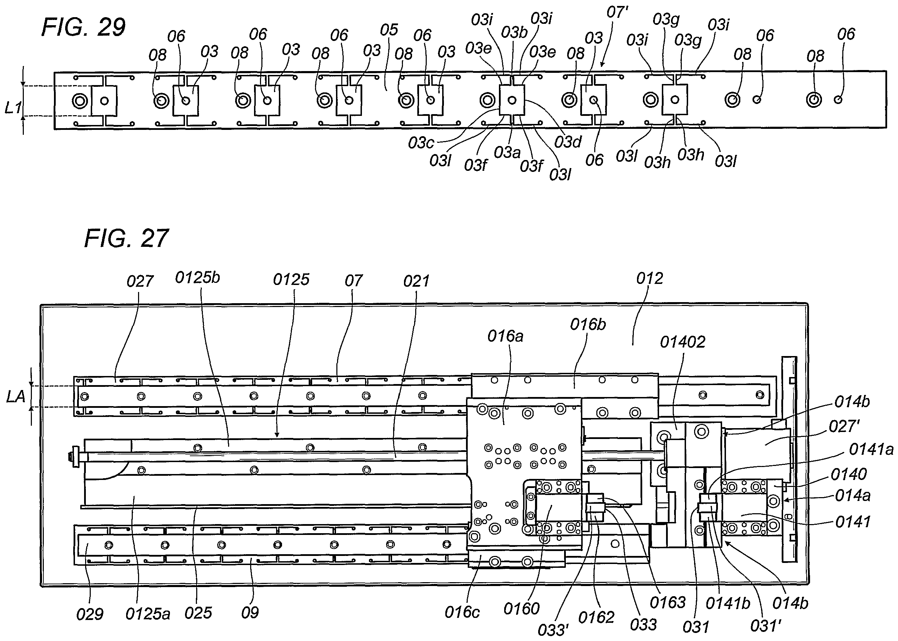

With reference also to Figure 29, which shows a second embodiment 07' of these interposed elements, the freely expanding means for connecting the guide means to the base comprise means 06 for fastening them to the base and means 08 for fastening them to the guide means, the means 08 for fastening them to the guide means being connected to the means for fastening them to the base in such a way as to allow free expansion or movement in the direction of extension of the guide means 027, 029.

The freely expanding means for connecting the guide means to the base comprise a respective elongated rod 07' which, as may be easily inferred from the second embodiment shown in Figure 29, has a main fastening body 05 and a set of fastening blocks 03, the latter being aligned with each other and distributed lengthways along the main body 05.

As shown in Figure 29, each block 03 is connected to the main body 05 in such a way that it can move lengthways relative to the main body 05.

As illustrated, each block 03 has a quadrangular shape and is connected to the main body 05 through a transversal portion 03a which is designed to bend lengthways relative to the body 05 and projects from a lateral edge of the block 03 itself.

Each block 03 is also connected to the main body 05 through a second portion 03b which can also bend lengthways relative to the main body and projects from the lateral edge of the block 03 on the side opposite the first bending portion 03a.

In this second preferred embodiment, each block 03 has a width LT that is greater than the width LA of the respective guide rod (illustrated in Figure 27). This means that the guide rests securely on the block and not on the parts of the body 05 on each side of it.

The block 03 is defined by a first and a second transversal end slot 03c, 03d from which there extend lengthways respective first and second side slots 03e, 03f, in the direction of the other transversal end slot 03c, 03d of the block 03 itself.

As illustrated, from the corresponding longitudinal slots 03e, 03f, there extend, towards the outer edges of the body 05, respective transversal slots 03g, 03h, from which there extend in turn, in opposite longitudinal directions, respective slots 03i, 03i and 031, 031.

These longitudinal slots 03i, 03i and 031, 031 extend in opposite directions past the respective transversal end slots 03c and 03d in the block, as illustrated in Figure 29.

The slots defining each block 03 are made by laser cutting a metal rod having a C-shaped cross section.

The means 06 for fastening to the base and the means 08 for fastening to the guide means consist of holes 06, 08 for respective screws which are not illustrated in the accompanying drawings. Preferably, as illustrated, the holes 08 for fastening the freely expanding element 07' to the base are made in the main body 05, while the holes 06 for fastening the guide means to the freely expanding element 07' are made in the blocks 03. A reversed position for these holes is also possible, however.

As shown in Figure 29, a pair of holes 06, 06 for fastening the respective guide and a pair of holes 08, 08 for fastening to the base are made directly in the main body 05 of the interposed metal rod 07' so as to fasten it more securely, especially at the fixed head.

This embodiment has a graduated measuring rod 025 which is advantageously raised with respect to the base 012, extending above the guide means 027, 029 to a position just below the transversal element 016a of the mobile block 016.

This further reduces measuring errors due to longitudinal bending of the mobile block 016 and increases measurement accuracy and precision.

Advantageously, the graduated measuring rod 025 is mounted on an essentially L-shaped supporting element 0125, with a branch 0125a that extends upwards and supports the graduated measuring rod 025 on a respective vertical face at or near the top end of the supporting element 0125 itself.

The supporting element 0125 also has a horizontal portion 0125b which rests on the base 012 and over which the drive shaft 021 extends.

Further, in this second preferred embodiment of the apparatus, the adapter element is fastened to a fixed supporting block 014b, while the contact surface is fastened to a respective fixed supporting block 014a that is separate from the block 014a that supports the adapter element.

Thus, when the measuring instrument is placed against the adapter in the same way as in the first preferred embodiment, the stress exerted by the application of the instrument to the engagement surfaces of the adapter is transmitted to the respective supporting block 014b and not on the supporting block 014a of the contact surface. This prevents unwanted bending of the block 014a that supports the contact surface 031, thus improving measuring precision.

More specifically, as shown in Figures 24 to 28, the fixed block 014a comprises a column-like base 0140 which is rigidly fixed to the granite base 012 and which supports at the top a contact element 031' mounting body or block 0141 that defines the contact surface 031.

The adapter mounting block 014b, too, also rigidly fixed to the base 012, has a portal frame structure with a first, narrow column 01401 and a second, wider column 01402 having a longitudinal through hole 01403 made in it for the passage of a motor drive shaft supported by the column 01402 itself.

The adapter mounting block 014b supports the first and second pins 056, 058 that are designed to be inserted into respective holes in the adapter and protrude from a corresponding flat horizontal surface of a crosspiece 057 on which the underside of the adapter rests.

The crosspiece 057 connects the columns 01402 and 01401 of the block 014b and has a pair of uprights 057' and 057" with a transversal gap between them for the insertion of the block 0141 which mounts the contact surface element 031' supported by the fork portions 0141a and 0141b.

As illustrated, the base 0140 for the contact surface mounting block 0141 extends behind the adapter mounting body 014b.

The invention described can be modified and adapted in several ways without thereby departing from the scope of the inventive concept.

## Claims

1. An apparatus (10) for calibrating measuring instruments, such as bore gauges and the like, the apparatus (10) comprising supporting means (12) and calibrating means having contact means for the respective measuring ends (15, 17) of the instruments to be calibrated, and consisting, for each end of the measuring instrument to be calibrated, of a first and a second contact surface (31, 33d); the apparatus (10) further comprising at least one adapter element (50, 150, 250) on at least one of the contact surfaces of the apparatus (10), the adapter element (50, 150, 250) comprising a central slot (63, 163, 263) which forms a passage for one of the contact surfaces (31) of the apparatus (10); and said adapter element (50, 150, 250) comprising engagement means having first and second engagement surfaces (71, 73, 171, 173,173,271,273) for a corresponding portion (15a, 15b) of the respective end of the measuring instrument, said first and second engagement surfaces (71, 73) extend transversally and symmetrically relative to the sides of the central slot (63) and are positioned opposite to each other and being in the form of a curved surface having a curvature radius (Rl, R2, R3) such as to define a plurality of contact points for a corresponding portion (15a, 15b) of different measuring instruments.

2. The apparatus (10) according to claim 1, wherein the curvature radius (Rl, R2, R3) of the engagement surface (71, 73, 171, 173, 271, 273) varies preferably between 25mm and 100mm.

3. The apparatus (10) according to any of the foregoing claims, wherein it comprises means for positioning the adapter element (50, 150, 250) on a respective mounting block.

4. The apparatus (10) according to any of the foregoing claims, wherein the element (52) comprises a bottom supporting surface (65, 165, 265) for the shaped end (15) of the measuring instrument (11).

5. The apparatus (10) according to any of the foregoing claims, wherein it comprises at least one adapter element (350) on at least one surface for contacting the apparatus (10), said adapter element (3509 comprising engagement means (363, 364) that can be positioned lengthways in suitable longitudinal positions for engaging the respective end (17) of the instrument to be calibrated.

6. The apparatus (10) according to any of the foregoing claims, wherein the adapter element comprises engagement means having a first and a second surface (363, 364) positioned opposite to and converging on one another and being designed to engage respective parts of the end measuring instrument.

7. The apparatus (10) according to claim 5 or 6, wherein the adapter element comprises engagement means having a first and a second surface (363, 364) facing upwards.

8. The apparatus (10) according to any of the foregoing claims from 5 to 7, wherein the first and second engagement surfaces (363, 364) extend in front of the contact surface (33d) with which they are associated.

9. The apparatus (10) according to any of the foregoing claims, wherein the contact means comprise a fixed block (14) that supports a respective end (15) of the measuring instrument.

10. The apparatus (10) according to any of the foregoing claims, wherein the contact means comprises a mobile block (16) that supports another end (17) of the measuring instrument.

11. The apparatus (10) according to any of the foregoing claims, wherein it comprises a fixed mounting block (22) which is located opposite the fixed block (14) and which supports a respective end (15) of the measuring instrument.

12. The apparatus according to any of the foregoing claims, wherein it comprises means (80) for locking a mobile contact surface (33d) block in the measuring position.

13. The apparatus according to claims 12, wherein the locking means (80) comprise a locking rod (82) and retaining means (84) which can be engaged and released and which act in conjunction with the rod (82).

14. The apparatus according to claim 13, wherein the retaining means (84) can be moved between a position in which the mobile contact surface (33d) can move freely and a position in which the mobile contact surface (33d) is locked.

15. The apparatus according to claim 13 or 14, wherein the retaining means (84) comprise an annular element (88) having an inside surface (85) through which the locking rod (82) passes.

16. The apparatus according to any of the foregoing claims from 12 to 15, wherein the engageable/releasable retaining means (84) comprise an actuating lever (92).

17. The apparatus according to claim 15 or 16, wherein the annular element (88) has an inside hole (85) which, in the locking position, interferes with the outside surface (82a) of the locking rod (82).

18. The apparatus according to any of the foregoing claims from 15 to 17, wherein the engageable/releasable retaining means (84) that act in conjunction with the rod (82) comprise an annular element (88) having an outside surface (88a) that is freely and rotatably housed in a matching surface (89) of the mobile head.

19. The apparatus according to any of the foregoing claims from 12 to 18, wherein the locking rod (82) passes through a hole (85) made in the mobile head (16).

20. The apparatus according to any of the foregoing claims from 12 to 19, wherein it comprises means for tensioning the rod (82) that locks the mobile head (16) in the measuring position.

21. The apparatus according to claim 20, wherein the tensioning means are designed to apply a pulling action (T) on the rod (82).

22. The apparatus according to claim 20 or 21, wherein the tensioning means comprise spring means (95)

23. The apparatus according to claim 22, wherein the spring means (95) act between a shoulder surface (96) in the fixed head (22) and a corresponding annular element (98) attached to the corresponding end of the fixed rod (82).

24. The apparatus according to any of the foregoing claims from 20 to 23, wherein the tensioning means comprise means for retaining the rod (82) at the other fixed head (14).

25. The apparatus according to any of the foregoing claims, wherein it comprises means (027, 029) for guiding the mobile block (016).

26. The apparatus according to claim 25, wherein it comprises a first and a second guide rod (027, 029).

27. The apparatus according to claim 25 or 26, wherein the guide rods (027, 029) extend lengthways and are transversally spaced from each other.

28. The apparatus according to claim 26 or 27, wherein the mobile block (016) comprises a large mounting plate (016a) which extends transversally across the first and second guide rods (027, 029).

29. The apparatus according to any of the foregoing claims, wherein a contact surface supporting element (0160) has a front curved section joining the main body of the block (0160) to the vertical extension (0162, 0163) that holds the contact surface mounting element.

30. The apparatus according to any of the forgoing claims from 26 to 29, wherein the drive shaft (021) extends between the guide rods (027, 029).

31. The apparatus according to any of the foregoing claims, wherein the mobile block (016) comprises a first slide shoe (017a) on one side and, on the opposite side, a first and a second slide shoe (017b, 017c).

32. The apparatus according to claim 31, wherein the distance between the drive shaft (021) and the guide rod for the pair of shoes (017b, 017c) is one third of the distance between the guide rods (027, 029).

33. The apparatus according to any of the foregoing claims from 25 to 32, wherein it comprises freely expanding means (07, 09) for connecting the guide means (027, 029) to the base (012).

34. The apparatus according to claim 33, wherein the freely expanding means for connecting the guide means to the base comprise interposed means (07, 09, 07') located between the guide means (027, 029) and the base (012).

35. The apparatus according to claim 33 or 34, wherein the freely expanding means for connecting the guide means to the base comprise means (08) for fastening them to the base and means (06) for fastening them to the guide means, the means (06) for fastening them to the guide means being connected to the means for fastening them to the base in such a way as to allow free movement in the direction of extension of the guide means (027, 029).

36. The apparatus according to any of the foregoing claims from 33 to 35, wherein the freely expanding means for connecting the guide means (027, 029) to the base (012) comprise an elongated rod (07, 09, 07') having a main fastening body (05) and at least one respective fastening block (03), the latter being connected to the main body (05) in such a way that it can move lengthways along the main body (05)

37. The apparatus according to claim 36, wherein it comprises a set of fastening blocks (03) that are aligned with each other and distributed lengthways, and connected to the main body (05) in such a way as to be able to move lengthways along the main body (05).

38. The apparatus according to claim 36 or 37, wherein each block (03) is connected to the main body (05) through a transversal portion (03a) which is designed to bend lengthways relative to said body.

39. The apparatus according to claim 38, wherein each block (03) is connected to the main body (05) through a second portion (03b) designed to bend lengthways relative to said body and extending on the side opposite the first bending portion (03a).

40. The apparatus according to any of the foregoing claims from 36 to 39, wherein each block (03) has a quadrangular shape.

41. The apparatus according to any of the foregoing claims from 36 to 40, wherein the width (LT) of each block (03) is greater than the width (LA) of the respective guide rod.

42. The apparatus according to any of the foregoing claims from 36 to 41, wherein each fastening block is defined by a first and a second transversal end slot (03c, 03d).

43. The apparatus according to claim 42, wherein from the first and second transversal end slots (03c, 03d) there extend lengthways respective first and second side slots (03e, 03f) in the direction of the other transversal end slot (03c, 03d) of the block (03) itself.

44. The apparatus according to claim 43, wherein a respective transversal slot (03g, 03h) extends from each side slot (03e, 03f).

45. The apparatus according to claim 44, wherein from the transversal end slots (03g, 03h) there extends lengthways respective slots (03i, 03i, 031, 031) in the opposite longitudinal direction.

46. The apparatus according to claim 45, wherein the longitudinal slots (03i, 03i, 031, 031) extend lengthways in opposite directions past the respective transversal end slot (03c, 03d) in the fastening block.

47. The apparatus according to any of the foregoing claims from 35 to 46, wherein the means (06) for fastening to the base and the means (08) for fastening to the guide means consist of respective holes (06, 08) for fastening screws.

48. The apparatus according to claim 47, wherein the holes (08) for fastening to the base are made in the main body (05) and the holes (06) for fastening to the guide means are made in the blocks (03).

49. The apparatus according to any of the foregoing claims, wherein it comprises a graduated measuring rod (025).

50. The apparatus according to claim 49, wherein the graduated measuring rod (025) extends above the base (012).

51. The apparatus according to claim 49 or 50, wherein the graduated measuring rod (025) is raised with respect to the guide means (027, 029)

52. The apparatus according to any of the foregoing claims from 49 to 51, wherein the graduated measuring rod (025) extends under the transversal element (016a) of the mobile block (016).

53. The apparatus according to any of the foregoing claims from 49 to 52, wherein the graduated measuring rod (025) is mounted on supporting element (0125) that extends upwards and supports the graduated measuring rod (025).

54. The apparatus according to claim 53, wherein the graduated measuring rod (025) is mounted at the top end of the supporting element (0125).

55. The apparatus according to claim 53 or 54, wherein the supporting element (0125) is essentially L-shaped, with a horizontal portion (0125b) above which the drive shaft (021) extends.

56. The apparatus according to any of the foregoing claims, wherein the adapter element is fastened to a fixed supporting block (014b) and wherein the contact surface (031) at the end of the measuring instrument is fastened to a respective fixed supporting block (014a) that is separate from the block (014b) that supports the adapter element.

## Patentansprüche

1. Vorrichtung (10) zum Kalibrieren von Messinstrumenten wie Messlehren für Bohrungen und dergleichen, wobei die Vorrichtung (10) Stützmittel (12) und Kalibriermittel umfasst, die Kontaktmittel für die jeweiligen Messenden (15, 17) der Instrumente aufweist, die kalibriert werden sollen, und bestehend aus einer ersten und einer zweiten Kontaktfläche (31, 33d) für jedes Ende des Messinstruments, das kalibriert werden soll; wobei die Vorrichtung (10) ferner mindestens ein Adapterelement (50, 150, 250) auf mindestens einer der Kontaktflächen der Vorrichtung (10) umfasst, wobei das Adapterelement (50, 150, 250) einen zentralen Schlitz (63, 163, 263) umfasst, der einen Durchgang für eine der Kontaktflächen (31) der Vorrichtung (10) bildet; und wobei das Adapterelement (50, 150, 250) Eingriffsmittel umfasst, die erste und zweite Eingriffsflächen (71, 73, 171, 173, 173, 271, 273) für einen entsprechenden Abschnitt (15a, 15b) des jeweiligen Endes des Messinstruments aufweisen, wobei sich die erste und die zweite Eingriffsfläche (71, 73) querverlaufend und symmetrisch in Bezug auf die Seiten des zentralen Schlitzes (63) erstrecken und einander gegenüberliegend angeordnet sind und in Form einer gekrümmten Fläche vorliegen, die einen Krümmungsradius (R1, R2, R3) aufweist, um eine Vielzahl von Kontaktpunkten für einen entsprechenden Abschnitt (15a, 15b) der verschiedenen Messinstrumente zu definieren.

2. Vorrichtung (10) nach Anspruch 1, wobei der Krümmungsradius (R1, R2, R3) der Eingriffsfläche (71, 73, 171, 173, 271, 273) vorzugsweise zwischen 25 mm und 100 mm variiert.

3. Vorrichtung (10) nach einem der vorhergehenden Ansprüche, wobei es Mittel zum Anordnen des Adapterelements (50, 150, 250) auf einem jeweiligen Montageblock umfasst.

4. Vorrichtung (10) nach einem der vorhergehenden Ansprüche, wobei das Element (52) eine untere Stützfläche (65, 165, 265) für das geformte Ende (15) des Messinstruments (11) umfasst.

5. Vorrichtung (10) nach einem der vorhergehenden Ansprüche, wobei sie mindestens ein Adapterelement (350) auf mindestens einer Fläche zum Kontaktieren der Vorrichtung (10) umfasst, wobei das Adapterelement (350) Eingriffsmittel (363, 364) umfasst, die in Längsrichtung in geeigneten Längspositionen angeordnet werden können, um das jeweilige Ende (17) des Instruments, das kalibriert werden soll, in Eingriff zu bringen.

6. Vorrichtung (10) nach einem der vorhergehenden Ansprüche, wobei das Adapterelement Eingriffsmittel umfasst, die eine erste und eine zweite Fläche (363, 364) aufweisen, die einander gegenüberliegend und aufeinander zusammenlaufend angeordnet und ausgelegt sind, jeweilige Teile des Endmessinstruments in Eingriff zu bringen.

7. Vorrichtung (10) nach Anspruch 5 oder 6, wobei das Adapterelement Eingriffsmittel umfasst, die eine erste und eine zweite Fläche (363, 364) aufweisen, die nach oben weist.

8. Vorrichtung (10) nach einem der Ansprüche 5 bis 7, wobei sich die erste und die zweite Eingriffsfläche (363, 364) vor der Kontaktfläche (33d) erstrecken, der sie zugeordnet sind.

9. Vorrichtung (10) nach einem der vorhergehenden Ansprüche, wobei die Kontaktmittel einen festen Block (14) umfassen, der ein jeweiliges Ende (15) des Messinstruments stützt.

10. Vorrichtung (10) nach einem der vorhergehenden Ansprüche, wobei die Kontaktmittel einen mobilen Block (16) umfassen, der ein anderes Ende (17) des Messinstruments stützt.

11. Vorrichtung (10) nach einem der vorhergehenden Ansprüche, wobei sie einen festen Montageblock (22) umfasst, der sich gegenüber dem festen Block (14) befindet und der ein jeweiliges Ende (15) des Messinstruments stützt.

12. Vorrichtung nach einem der vorhergehenden Ansprüche, wobei sie Mittel (80) zum Verriegeln eines mobilen Blocks der Kontaktfläche (33d) in der Messposition umfasst.

13. Vorrichtung nach Anspruch 12, wobei die Verriegelungsmittel (80) eine Verriegelungsstange (82) und Haltemittel (84) umfassen, die in Eingriff gebracht und gelöst werden können und die mit der Stange (82) zusammenwirken.

14. Vorrichtung nach Anspruch 13, wobei die Haltemittel (84) zwischen einer Position, in der sich die mobile Kontaktfläche (33d) frei bewegen kann, und einer Position, in der die mobile Kontaktfläche (33d) verriegelt ist, bewegt werden können.

15. Vorrichtung nach Anspruch 13 oder 14, wobei die Haltemittel (84) ein ringförmiges Element (88) umfassen, das eine innere Fläche (85) aufweist, durch welche die Verriegelungsstange (82) geführt ist.

16. Vorrichtung nach einem der vorhergehenden Ansprüche 12 bis 15, wobei die eingreifbaren/lösbaren Haltemittel (84) einen Betätigungshebel (92) umfassen.

17. Vorrichtung nach Anspruch 15 oder 16, wobei das ringförmige Element (88) ein inneres Loch (85) aufweist, das in der Verriegelungsposition mit der äußeren Fläche (82a) der Verriegelungsstange (82) in Eingriff gelangt.

18. Vorrichtung nach einem der vorhergehenden Ansprüche 15 bis 17, wobei die eingreifbaren/lösbaren Haltemittel (84), die mit der Stange (82) zusammenwirken, ein ringförmiges Element (88) umfassen, das eine äußere Fläche (88a) umfasst, die in einer zusammenpassenden Fläche (89) des mobilen Kopfes frei und drehbar untergebracht ist.

19. Vorrichtung nach einem der vorhergehenden Ansprüche 12 bis 18, wobei die Verriegelungsstange (82) durch ein Loch (85) geführt ist, das in dem mobilen Kopf (16) ausgebildet ist.

20. Vorrichtung nach einem der vorhergehenden Ansprüche 12 bis 19, wobei sie Mittel zum Spannen der Stange (82) umfasst, die den mobilen Kopf (16) in der Messposition verriegelt.

21. Vorrichtung nach Anspruch 20, wobei die Spannungsmittel ausgelegt sind, um eine Zugeinwirkung (T) auf die Stange (82) aufzubringen.

22. Vorrichtung nach Anspruch 20 oder 21, wobei die Spannungsmittel Federmittel (95) umfassen.

23. Vorrichtung nach Anspruch 22, wobei die Federmittel (95) zwischen einer Schulterfläche (96) in dem festen Kopf (22) und einem entsprechenden ringförmigen Element (98) wirken, das an dem entsprechenden Ende der festen Stange (82) befestigt ist.

24. Vorrichtung nach einem der vorhergehenden Ansprüche 20 bis 23, wobei die Spannungsmittel Mittel zum Halten der Stange (82) an dem anderen festen Kopf (14) umfassen.

25. Vorrichtung nach einem der vorhergehenden Ansprüche, wobei sie Mittel (027, 029) zum Führen des mobilen Blocks (016) umfasst.

26. Vorrichtung nach Anspruch 25, wobei sie eine erste und eine zweite Führungsstange (027, 029) umfasst.

27. Vorrichtung nach Anspruch 25 oder 26, wobei sich die Führungsstangen (027, 029) in Längsrichtung erstrecken und voneinander in Querrichtung beabstandet sind.

28. Vorrichtung nach Anspruch 26 oder 27, wobei der mobile Block (016) eine große Befestigungsplatte (016a) umfasst, die sich in Querrichtung über die erste und die zweite Führungsstange (027, 029) erstreckt.

29. Vorrichtung nach einem der vorhergehenden Ansprüche, wobei ein Kontaktflächenstützelement (0160) einen vorderen gekrümmten Abschnitt aufweist, der den Hauptkörper des Blocks (0160) mit der vertikalen Abmessung (0162, 0163) verbindet, die das Kontaktflächenbefestigungselement hält.

30. Vorrichtung nach einem der vorhergehenden Ansprüche 26 bis 29, wobei sich die Antriebswelle (021) zwischen den Führungsstangen (027, 029) erstreckt.

31. Vorrichtung nach einem der vorhergehenden Ansprüche, wobei der mobile Block (016) einen ersten Gleitschuh (017a) auf einer Seite und auf der gegenüberliegenden Seite einen ersten und einen zweiten Gleitschuh (017b, 017c) umfasst.

32. Vorrichtung nach Anspruch 31, wobei der Abstand zwischen der Antriebswelle (021) und der Führungsstange für das Paar Schuhe (017b, 017c) ein Drittel des Abstands zwischen den Führungsstangen (027, 029) beträgt.

33. Vorrichtung nach einem der vorhergehenden Ansprüche 25 bis 32, wobei sie frei expandierende Mittel (07, 09) zum Verbinden der Führungsmittel (027, 029) mit der Basis (012) umfasst.

34. Vorrichtung nach Anspruch 33, wobei die sich frei expandierenden Mittel zum Verbinden der Führungsmittel mit der Basis zwischengeschaltete Mittel (07, 09, 07') umfassen, die sich zwischen den Führungsmitteln (027, 029) und der Basis (012) befinden.

35. Vorrichtung nach Anspruch 33 oder 34, wobei die sich frei expandierenden Mittel zum Verbinden der Führungsmittel mit der Basis Mittel (08), um sie an der Basis zu befestigen, und Mittel (06), um sie an den Führungsmitteln zu befestigen, umfassen, wobei die Mittel (06), um sie an den Führungsmitteln zu befestigen, mit den Mitteln, um sie an der Basis zu befestigen, derart verbunden sind, dass eine freie Bewegung in der Ausdehnungsrichtung der Führungsmittel (027, 029) ermöglicht wird.

36. Vorrichtung nach einem der vorhergehenden Ansprüche 33 bis 35, wobei die sich frei expandierenden Mittel zum Verbinden der Führungsmittel (027, 029) mit der Basis (012) eine längliche Stange (07, 09, 07') umfassen, die einen Hauptbefestigungskörper (05) und mindestens einen zugehörigen Befestigungsblock (03) aufweist, wobei letzterer mit dem Hauptkörper (05) derart verbunden ist, dass er sich in Längsrichtung entlang des Hauptkörpers (05) bewegen kann.

37. Vorrichtung nach Anspruch 36, wobei sie einen Satz von Befestigungsblöcken (03) umfasst, die miteinander ausgerichtet und in Längsrichtung verteilt sind und mit dem Hauptkörper (05) derart verbunden sind, dass sie sich in Längsrichtung entlang des Hauptkörpers (05) bewegen können.

38. Vorrichtung nach Anspruch 36 oder 37, wobei jeder Block (03) mit dem Hauptkörper (05) durch einen transversalen Abschnitt (03a) verbunden ist, der ausgelegt ist, um sich in Bezug auf den Körper in Längsrichtung zu biegen.

39. Vorrichtung nach Anspruch 38, wobei jeder Block (03) mit dem Hauptkörper (05) durch einen zweiten Abschnitt (03b) verbunden ist, der ausgelegt ist, um sich in Bezug auf den Körper in Längsrichtung zu biegen, und sich auf der Seite erstreckt, die dem ersten Biegeabschnitt (03a) gegenüberliegt.

40. Vorrichtung nach einem der vorhergehenden Ansprüche 36 bis 39, wobei jeder Block (03) eine viereckige Form aufweist.

41. Vorrichtung nach einem der vorhergehenden Ansprüche 36 bis 40, wobei die Breite (LT) jedes Blocks (03) größer als die Breite (LA) der jeweiligen Führungsstange ist.

42. Vorrichtung nach einem der vorhergehenden Ansprüche 36 bis 41, wobei jeder Befestigungsblock durch einen ersten und einen zweiten transversalen Endschlitz (03c, 03d) definiert ist.

43. Vorrichtung nach Anspruch 42, wobei sich von dem ersten und dem zweiten transversalen Endschlitz (03c, 03d) in Längsrichtung jeweilige erste und zweite Seitenschlitze (03e, 03f) in der Richtung des anderen transversalen Endschlitzes (03c, 03d) des Blocks (03) selbst erstrecken.

44. Vorrichtung nach Anspruch 43, wobei sich ein jeweiliger transversaler Schlitz (03g, 03h) von jedem Seitenschlitz (03e, 03f) erstreckt.

45. Vorrichtung nach Anspruch 44, wobei sich von den transversalen Endschlitzen (03g, 03h) in Längsrichtung jeweilige Schlitze (03i, 03i, 031, 031) in der entgegensetzten Längsrichtung erstrecken.

46. Vorrichtung nach Anspruch 45, wobei sich die Längsschlitze (03i, 03i, 031, 031) in Längsrichtung in entgegensetzten Richtungen an dem jeweiligen transversalen Endschlitz (03c, 03d) vorbei in dem Befestigungsblock erstrecken.

47. Vorrichtung nach einem der vorhergehenden Ansprüche 35 bis 46, wobei die Mittel (06) zum Befestigen an der Basis und die Mittel (08) zum Befestigen an den Führungsmitteln aus jeweiligen Löchern (06, 08) zum Befestigen von Schrauben bestehen.

48. Vorrichtung nach Anspruch 47, wobei die Löcher (08) zum Befestigen an der Basis in dem Hauptkörper (05) ausgeführt sind und die Löcher (06) zum Befestigen der Führungsmittel in den Blöcken (03) ausgeführt sind.

49. Vorrichtung nach einem der vorhergehenden Ansprüche, wobei sie eine graduierte Messstange (025) umfasst.

50. Vorrichtung nach Anspruch 49, wobei sich die graduierte Messstange (025) über die Basis (012) erstreckt.

51. Vorrichtung nach Anspruch 49 oder 50, wobei die graduierte Messstange (025) in Bezug auf die Führungsmittel (027, 029) angehoben ist.

52. Vorrichtung nach einem der vorhergehenden Ansprüche 49 bis 51, wobei sich die graduierte Messstange (025) unter dem transversalen Element (016a) des mobilen Blocks (016) erstreckt.

53. Vorrichtung nach einem der vorhergehenden Ansprüche 49 bis 52, wobei die graduierte Messstange (025) an dem Stützelement (0125) befestigt ist, das sich aufwärts erstreckt und die graduierte Messstange (025) stützt.

54. Vorrichtung nach Anspruch 53, wobei die graduierte Messstange (025) an dem oberen Ende des Stützelements (0125) befestigt ist.

55. Vorrichtung nach Anspruch 53 oder 54, wobei das Stützelement (0125) im Wesentlichen L-förmig mit einem horizontalen Abschnitt (0125b) ist, der sich über die Antriebswelle (021) erstreckt.

56. Vorrichtung nach einem der vorhergehenden Ansprüche, wobei ein Adapterelement an einem festen Stützblock (014b) befestigt ist und wobei die Kontaktfläche (031) an dem Ende des Messinstruments an einem jeweiligen festen Stützblock (014a) befestigt ist, der von dem Block (014b) getrennt ist, der das Adapterelement stützt.

## Revendications

1. Appareil (10) pour l'étalonnage d'instruments de mesure, tels que des jauges d'alésage et similaires, appareil (10) comprenant des moyens de support (12) et des moyens d'étalonnage possédant des moyens de contact pour les extrémités de mesure respectives (15, 17) des instruments à étalonner, et consistant, pour chaque extrémité de l'instrument de mesure à étalonner, en une première et une seconde surface de contact (31, 33d) ; l'appareil (10) comprenant en outre au moins un élément adaptateur (50, 150, 250) sur au moins l'une des surfaces de contact de l'appareil (10), l'élément adaptateur (50, 150, 250) comprenant une fente centrale (63, 163, 263) qui forme un passage pour l'une des surfaces de contact (31) de l'appareil (10) ; et ledit élément adaptateur (50, 150, 250) comprenant des moyens d'engagement présentant des première et seconde surfaces d'engagement (71, 73, 171, 173, 173, 271, 273) pour une portion correspondante (15a, 15b) de l'extrémité respective de l'instrument de mesure, lesdites première et seconde surfaces d'engagement (71, 73) s'étendent de manière transversale et symétrique par rapport aux bords de la fente centrale (63) et sont positionnées l'une à l'opposé de l'autre et se présentant sous la forme d'une surface courbe possédant un rayon de courbure (RI, R2, R3) de manière à définir une pluralité de points de contact pour une portion correspondante (15a, 15b) de différents instruments de mesure.

2. Appareil (10) selon la revendication 1, dans lequel le rayon de courbure (RI, R2, R3) de la surface d'engagement (71, 73, 171, 173, 271, 273) varie de préférence entre 25 mm et 100 mm.

3. Appareil (10) selon l'une quelconque des revendications précédentes, comprenant des moyens de positionnement de l'élément adaptateur (50, 150, 250) sur un bloc de montage respectif.

4. Appareil (10) selon l'une quelconque des revendications précédentes, dans lequel l'élément (52) comprend une surface de support inférieure (65, 165, 265) pour l'extrémité profilée (15) de l'instrument de mesure (11).

5. Appareil (10) selon l'une quelconque des revendications précédentes, comprenant au moins un élément adaptateur (350) sur au moins une surface pour entrer en contact avec l'appareil (10), ledit élément adaptateur (3509 comprenant des moyens d'engagement (363, 364) qui peuvent être positionnés longitudinalement dans des positions longitudinales appropriées pour engager l'extrémité respective (17) de l'instrument à étalonner.

6. Appareil (10) selon l'une quelconque des revendications précédentes, dans lequel l'élément adaptateur comprend des moyens d'engagement possédant une première et une seconde surface (363, 364) positionnées en regard et convergeant l'une à l'autre et étant prévues pour engager des parties respectives de l'extrémité de l'instrument de mesure.

7. Appareil (10) selon la revendication 5 ou 6, dans lequel l'élément adaptateur comprend des moyens d'engagement possédant une première et une seconde surface (363, 364) orientées vers le haut.

8. Appareil (10) selon l'une quelconque des revendications précédentes de 5 à 7, dans lequel les première et seconde surfaces d'engagement (363, 364) s'étendent devant la surface de contact (33d) à laquelle elles sont associées.

9. Appareil (10) selon l'une quelconque des revendications précédentes, dans lequel les moyens de contact comprennent un bloc fixe (14) qui supporte une extrémité respective (15) de l'instrument de mesure.

10. Appareil (10) selon l'une quelconque des revendications précédentes, dans lequel les moyens de contact comprennent un bloc mobile (16) qui supporte une autre extrémité (17) de l'instrument de mesure.

11. Appareil (10) selon l'une quelconque des revendications précédentes, comprenant un bloc de montage fixe (22) qui est situé en regard du bloc fixe (14) et qui supporte une extrémité respective (15) de l'instrument de mesure.

12. Appareil selon l'une quelconque des revendications précédentes, comprenant des moyens (80) de verrouillage d'une surface de contact mobile (33d) bloquée en position de mesure.

13. Appareil selon la revendication 12, dans lequel les moyens de verrouillage (80) comprennent une tige de verrouillage (82) et des moyens de retenue (84) aptes à être engagés et libérés et qui coopèrent avec la tige (82).

14. Appareil selon la revendication 13, dans lequel les moyens de retenue (84) peuvent être déplacés entre une position dans laquelle la surface de contact mobile (33d) peut se déplacer librement et une position dans laquelle la surface de contact mobile (33d) est verrouillée.

15. Appareil selon la revendication 13 ou 14, dans lequel les moyens de retenue (84) comprennent un élément annulaire (88) possédant une surface intérieure (85) à travers laquelle passe la tige de verrouillage (82).

16. Appareil selon l'une quelconque des revendications précédentes de 12 à 15, dans lequel les moyens de retenue engageables/libérables (84) comprennent un levier d'actionnement (92).

17. Appareil selon la revendication 15 ou 16, dans lequel l'élément annulaire (88) possède un orifice intérieur (85) qui, en position de verrouillage, interfère avec la surface extérieure (82a) de la tige de verrouillage (82).

18. Appareil selon l'une quelconque des revendications précédentes de 15 à 17, dans lequel les moyens de retenue engageables/libérables (84) qui coopèrent avec la tige (82) comprennent un élément annulaire (88) possédant une surface extérieure (88a) qui est logée libre en rotation dans une surface en correspondance (89) de la tête mobile.

19. Appareil selon l'une quelconque des revendications précédentes de 12 à 18, dans lequel la tige de verrouillage (82) passe à travers un orifice (85) pratiqué dans la tête mobile (16).

20. Appareil selon l'une quelconque des revendications précédentes de 12 à 19, comprenant des moyens de mise en tension de la tige (82) qui verrouille la tête mobile (16) en position de mesure.

21. Appareil selon la revendication 20, dans lequel les moyens de mise en tension sont conçus pour exercer une traction (T) sur la tige (82).

22. Appareil selon la revendication 20 ou 21, dans lequel les moyens de mise en tension comprennent des moyens de ressort (95).

23. Appareil selon la revendication 22, dans lequel les moyens de ressort (95) agissent entre une surface d'épaulement (96) dans la tête fixe (22) et un élément annulaire correspondant (98) fixé à l'extrémité correspondante de la tige fixe (82).

24. Appareil selon l'une quelconque des revendications précédentes de 20 à 23, dans lequel les moyens de mise en tension comprennent des moyens de retenue de la tige (82) au niveau de l'autre tête fixe (14).

25. Appareil selon l'une quelconque des revendications précédentes, comprenant des moyens (027, 029) de guidage du bloc mobile (016).

26. Appareil selon la revendication 25, comprenant une première et une seconde tige de guidage (027, 029).

27. Appareil selon la revendication 25 ou 26, dans lequel les tiges de guidage (027, 029) s'étendent longitudinalement et sont transversalement espacées l'une de l'autre.

28. Appareil selon la revendication 26 ou 27, dans lequel le bloc mobile (016) comprend une grande platine de montage (016a) qui s'étend transversalement à travers les première et seconde tiges de guidage (027, 029).

29. Appareil selon l'une quelconque des revendications précédentes, dans lequel un élément de support de la surface de contact (0160) possède une section avant recourbée reliant le corps principal du bloc (0160) à l'extension verticale (0162, 0163) qui maintient l'élément de montage de la surface de contact.

30. Appareil selon l'une quelconque des revendications précédentes de 26 à 29, dans lequel l'arbre d'entraînement (021) s'étend entre les tiges de guidage (027, 029).

31. Appareil selon l'une quelconque des revendications précédentes, dans lequel le bloc mobile (016) comprend un premier patin coulissant (017a) d'un côté et, du côté opposé, un premier et un second patin coulissant (017b, 017c).

32. Appareil selon la revendication 31, dans lequel la distance entre l'arbre d'entraînement (021) et la tige de guidage pour la paire de patins (017b, 017c) est un tiers de la distance entre les tiges de guidage (027, 029).

33. Appareil selon l'une quelconque des revendications précédentes de 25 à 32, comprenant des moyens aptes à s'écarter librement (07, 09) pour relier les moyens de guidage (027, 029) au socle (012).

34. Appareil selon la revendication 33, dans lequel les moyens aptes à s'écarter librement pour relier les moyens de guidage au socle comprennent des moyens interposés (07, 09, 07') situés entre les moyens de guidage (027, 029) et le socle (012).

35. Appareil selon la revendication 33 ou 34, dans lequel les moyens aptes à s'écarter librement pour relier les moyens de guidage au socle comprennent des moyens (08) permettant de les fixer au socle et des moyens (06) permettant de les fixer aux moyens de guidage, les moyens (06) permettant de les fixer aux moyens de guidage étant reliés aux moyens permettant de les fixer au socle de manière à permettre une liberté de mouvement dans la direction d'écartement des moyens de guidage (027, 029).

36. Appareil selon l'une quelconque des revendications précédentes de 33 à 35, dans lequel les moyens aptes à s'écarter librement pour relier les moyens de guidage (027, 029) au socle (012) comprennent une tige allongée (07, 09, 07') possédant un corps principal de fixation (05) et au moins un bloc de fixation respectif (03), ce dernier étant relié au corps principal (05) d'une manière à permettre son déplacement longitudinalement le long du corps principal (05).

37. Appareil selon la revendication 36, comprenant un jeu de blocs de fixation (03) qui sont alignés les uns aux autres et répartis longitudinalement, et reliés au corps principal (05) de manière à pouvoir se déplacer longitudinalement le long du corps principal (05).

38. Appareil selon la revendication 36 ou 37, dans lequel chaque bloc (03) est relié au corps principal (05) à travers une portion transversale (03a) qui est conçue pour fléchir longitudinalement par rapport audit corps.

39. Appareil selon la revendication 38, dans lequel chaque bloc (03) est relié au corps principal (05) à travers une seconde portion (03b) conçue pour fléchir longitudinalement par rapport audit corps et s'étendant sur le côté opposé à la première portion fléchissante (03a).

40. Appareil selon l'une quelconque des revendications précédentes de 36 à 39, dans lequel chaque bloc (03) a une forme quadrangulaire.

41. Appareil selon l'une quelconque des revendications précédentes de 25 à 40, dans lequel la largeur (LT) de chaque bloc (03) est supérieure à la largeur (LA) de la tige de guidage respective.

42. Appareil selon l'une quelconque des revendications précédentes de 36 à 41, dans lequel chaque bloc de fixation est défini par une première et une seconde fente d'extrémité transversale (03c, 03d).

43. Appareil selon la revendication 42, dans lequel depuis les première et seconde fentes d'extrémité transversales (03c, 03d) s'étendent longitudinalement des première et seconde fentes latérales respectives (03e, 03f) dans la direction de l'autre fente d'extrémité transversale (03c, 03d) du bloc (03) lui-même.

44. Appareil selon la revendication 43, dans lequel une fente transversale respective (03g, 03h) s'étend depuis chaque fente latérale (03e, 03f).

45. Appareil selon la revendication 44, dans lequel depuis les fentes d'extrémité transversales (03g, 03h) s'étendent longitudinalement des fentes respectives (03i, 03i, 031, 031 dans la direction longitudinale opposée.

46. Appareil selon la revendication 45, dans lequel les fentes longitudinales (03i, 03i, 031, 031) s'étendent longitudinalement dans des directions opposées au-delà de la fente d'extrémité transversale respective (03c, 03d) dans le bloc de fixation.

47. Appareil selon l'une quelconque des revendications précédentes de 35 à 46, dans lequel les moyens (06) de fixation au socle et les moyens (08) de fixation aux moyens de guidage consistent en des trous respectifs (06, 08) pour des vis de fixation.

48. Appareil selon la revendication 47, dans lequel les trous (08) de fixation au socle sont pratiqués dans le corps principal (05) et les trous (06) de fixation aux moyens de guidage sont pratiqués dans les blocs (03).

49. Appareil selon l'une quelconque des revendications précédentes, comprenant une tige de mesure graduée (025).

50. Appareil selon la revendication 49, dans lequel la tige de mesure graduée (025) s'étend au-dessus du socle (012).

51. Appareil selon la revendication 49 ou 50, dans lequel la tige de mesure graduée (025) est surélevée par rapport aux moyens de guidage (027, 029).

52. Appareil selon l'une quelconque des revendications précédentes de 49 à 51, dans lequel la tige de mesure graduée (025) s'étend en dessous de l'élément transversal (016a) du bloc mobile (016).

53. Appareil selon l'une quelconque des revendications précédentes de 49 à 52, dans lequel la tige de mesure graduée (025) est montée sur l'élément de support (0125) qui s'étend vers le haut et supporte la tige de mesure graduée (025).

54. Appareil selon la revendication 53, dans lequel la tige de mesure graduée (025) est montée au niveau de l'extrémité supérieure de l'élément de support (0125).

55. Appareil selon la revendication 53 ou 54, dans lequel l'élément de support (0125) est sensiblement en forme de L, avec une portion horizontale (0125b) au-dessus de laquelle s'étend l'arbre d'entraînement (021).

56. Appareil selon l'une quelconque des revendications précédentes, dans lequel l'élément adaptateur est fixé à un bloc-support fixe (014b) et dans lequel la surface de contact (031) à l'extrémité de l'instrument de mesure est fixée à un bloc-support fixe respectif (014a) qui est distinct du bloc (014b) qui supporte l'élément adaptateur.
